# EUROPÄISCHE PATENTANMELDUNG

(11) **EP 2 330 014 A1**
(43) Veröffentlichungstag der Anmeldung: **08.06.2011**
(21) Anmeldenummer: 10192480.1
(22) Anmeldetag: 25.11.2010
(51) Int. Cl.: B62D 15/02, B60W 30/06, B62D 5/04

(54) **Parksystem für ein Kraftfahrzeug**

(30) Priorität: 04.12.2009 DE 102009047473
(71) Anmelder: Robert Bosch GmbH, 70442 Stuttgart (DE)
(72) Erfinder: Gruetzmann, Andreas, 70176 Stuttgart (DE); Scheuerle, Thomas, 71711 Murr (DE); Niemz, Volker, 71277 Rutesheim (DE)

(57) **Zusammenfassung**

Die vorliegende Erfindung betrifft ein Parksystem für ein Kraftfahrzeug, welches ein Sensorsystem zum Messen von Daten über die Umgebung des Fahrzeugs, eine Parkanweisungseinrichtung zum Ausgeben von Lenkanweisungen an den Fahrer, eine Parklenkeinrichtung zum automatischen Lenken des Fahrzeugs beim Parken, und eine zentrale Prozessierungseinrichtung zum Berechnen von einer, von der aktuellen Fahrzeugposition ausgehenden Trajektorie aus gemessenen Umgebungsdaten und Steuern der Parkanweisungseinrichtung und der Parklenkeinrichtung, umfasst sowie ein Verfahren zum Parken eines Kraftfahrzeugs mit einem derartigen Parksystem.

## Beschreibung

### Parksystem für ein Kraftfahrzeug

Die vorliegende Erfindung betrifft ein Parksystem für ein Kraftfahrzeug sowie ein Verfahren zum Parken eines Kraftfahrzeugs mit einem derartigen Parksystem.

### Stand der Technik

Für Kraftfahrzeuge sind einerseits Parksysteme bekannt, die Lenkanweisungen an den Fahrer ausgeben (Park Steering Information, PSI). Andererseits sind für Kraftfahrzeuge Parksysteme bekannt, die das Fahrzeug beim Parken automatisch, das heißt ohne aktive Lenkbewegung des Fahrers, lenken (Park Steering Control, PSC). Automatisch lenkende Parksysteme werden beispielsweise in den Druckschriften US 2008051959, US 2007288142, US 2007282499 und US 6170591 beschrieben.

Aufgrund verschiedener Einflüsse kann jedoch ein automatisch lenkendes Parksystem ausfallen. Beispielsweise kann bei einem automatisch lenkenden Parksystem, welches ein Steuergerät und eine elektrische Lenkung aufweist, die Kommunikation zwischen dem Steuergerät und der elektrischen Lenkung unterbrochen werden und/oder die elektrische Lenkung kann - beispielsweise aufgrund einer zu hohen Reibung - die automatische Lenkbewegung nicht durchführen. Herkömmlicherweise wird der Parkvorgang in solchen Fällen systemseitig abgebrochen und eine entsprechende Meldung an den Fahrer ausgegeben.

### Offenbarung der Erfindung

Gegenstand der vorliegenden Erfindung ist ein Parksystem, beispielsweise ein Ein- und/oder Ausparksystem, für ein Kraftfahrzeug, welches
- ein Sensorsystem zum Messen von Daten über die Umgebung des Fahrzeugs,
- eine Parkanweisungseinrichtung zum Ausgeben von Lenkanweisungen an den Fahrer,
- eine Parklenkeinrichtung zum automatischen Lenken des Fahrzeugs beim Parken, und
- eine zentrale Prozessierungseinrichtung zum Berechnen von einer, von der aktuellen Fahrzeugposition ausgehenden Trajektorie (Bahnplanung) aus gemessenen Umgebungsdaten und Steuern der Parkanweisungseinrichtung und der Parklenkeinrichtung,
umfasst.

Das Parksystem hat den Vorteil, dass es dem Fahrer das Parken sowohl durch Lenkanweisungen als auch durch eine automatische Lenkung ermöglicht. Der Fahrer kann dabei zwischen den beiden Parkvarianten wählen oder die Parkvarianten können durch die Prozessierungseinrichtung situationsbedingt ausgewählt und aktiviert beziehungsweise deaktiviert werden. Da die Parkanweisungseinrichtung und die Parklenkeinrichtung durch eine gemeinsame, zentrale Prozessierungseinrichtung angesteuert werden, kann das Parksystem dabei vorteilhafterweise ohne großen Mehraufwand realisiert werden.

Die Trajektorie kann insbesondere eine von der aktuellen Fahrzeugposition ausgehende in die Parklücke führende oder aus der Parklücke herausführende Trajektorie sein.

Die Parkanweisungseinrichtung kann den Fahrer durch klare Hinweise zum Zeitpunkt und Grad des Lenkeinschlags und/oder zu optimalen Stopp- und/oder Umlenkpunkten in die Parklücke oder aus der Parklücke heraus führen. Die Prozessierungseinrichtung kann die Parkanweisungseinrichtung insbesondere derart ansteuern, dass die Parkanweisungseinrichtung der berechneten Trajektorie entsprechende Lenkanweisungen an den Fahrer ausgibt (Park Steering Information, PSI). Der Fahrer kann dann durch befolgen der Lenkanweisungen und durch manuelles Lenken in eine Parklücke einparken oder aus einer Parklücke ausparken.

Die Parklenkeinrichtung kann die Lenkmanöver, beispielsweise mithilfe oder über die elektrische Servolenkung des Fahrzeugs, automatisch durchführen. Die Prozessierungseinrichtung kann die Parklenkeinrichtung insbesondere derart ansteuern, dass die Parklenkeinrichtung das Fahrzeug entsprechend der berechneten Trajektorie automatisch, insbesondere in die Parklücke oder aus der Parklücke heraus, lenkt (Park Steering Control, PSC).

Insofern die automatische Lenkung, beispielsweise vor oder während des Parkvorgangs, ausfällt, kann auf die passive Parkanweisungseinrichtung umgeschaltet und gegebenenfalls der Grund des Ausfalls durch die Prozessierungseinrichtung geprüft werden.

Im Rahmen einer Ausführungsform steuert daher die Prozessierungseinrichtung im Fall eines Ausfalls der Parklenkeinrichtung, insbesondere der Automatikfunktion der Parklenkeinrichtung, die Parkanweisungseinrichtung an. Insbesondere kann die Prozessierungseinrichtung im Fall eines Ausfalls der Parklenkeinrichtung, insbesondere der Automatikfunktion der Parklenkeinrichtung, die Parkanweisungseinrichtung aktivieren. Auf diese Weise kann vorteilhafterweise ein vom Fahrer ungewollter Abbruch des Parkvorgangs und/oder der Parkhilfe vermieden werden.

Ein Ausfall der Parklenkeinrichtung kann beispielsweise darauf beruhen, dass:
- die Kommunikation zwischen der Prozessierungseinrichtung und der Parklenkeinrichtung gestört oder unterbrochen ist, und/oder
- die Parklenkeinrichtung selbst defekt ist, und/oder
- die Parklenkeinrichtung durch ein Steuergerät oder die Prozessierungseinrichtung ausgeschaltet wird, was beispielsweise darin begründet sein kann, dass Steuergerät oder die Prozessierungseinrichtung erkennt, dass:
   - das automatische Lenken, beispielsweise aufgrund eines mechanischen Widerstands auf die Räder/Reifen beziehungsweise der Haftreibung mit Untergrund oder Bordstein, eine erhöhte Stromaufnahme erfordert, welche nicht dauerhaft gewährleistet werden kann; und/oder
   - eine thermische Überlastung der Parklenkeinrichtung und damit eine Zerstörung der Parklenkeinrichtung droht; und/oder
   - ein fehlerhaftes Verhalten der Parklenkeinrichtung vorliegt.

Im Rahmen einer weiteren Ausführungsform steuert die Prozessierungseinrichtung im Normalfall die Parklenkeinrichtung an. Insbesondere kann die Prozessierungseinrichtung im Normalfall die Parklenkeinrichtung aktivieren. Dabei kann unter dem Normalfall insbesondere jeder Parkvorgang mit einer funktionierenden Parklenkeinrichtung verstanden werden. Dies hat den Vorteil, dass der Fahrer beim Parken grundsätzlich nicht selber lenken muss. Die Parkanweisungseinrichtung kann im Normalfall unangesteuert, insbesondere unaktiviert, bleiben.

Beispielsweise im Fall eines Ausfalls der Parklenkeinrichtung, welcher bei einem Parkvorgang durch eine zu hohe Reibung der Reifen auf dem Straßenbelag hervorgerufen wurde, kann die Parklenkeinrichtung bei einem späteren Parkvorgang auf anderem Straßenbelag wieder einsatzbereit sein. Im Fall einer wieder einsatzbereiten Parklenkeinrichtung kann die Prozessierungseinrichtung vorteilhafterweise die Parklenkeinrichtung wieder ansteuern, insbesondere aktivieren. Auf diese Weise profitiert der Fahrer dann wieder davon, dass er nicht selber lenken muss. Die Parkanweisungseinrichtung kann in diesem Fall wieder deaktiviert werden. Auf diese Weise kann beispielsweise Energie gespart werden.

Im Rahmen einer weiteren Ausführungsform ist die Parkanweisungseinrichtung eine Benutzerschnittstelle (Mensch-Maschine-Schnittstelle (MMS), englisch: "human machine interface" (HMI), insbesondere ein Befehlsgeber), beispielsweise zum optischen und/oder akustischen und/oder haptischen Ausgeben von Lenkanweisungen an den Fahrer. Die Parkanweisungseinrichtung kann beispielsweise eine Anzeigeeinrichtung, beispielsweise ein LCD-Display, und/oder einen Lautsprecher aufweisen.

Im Rahmen einer weiteren Ausführungsform ist die Parklenkeinrichtung eine elektrische, insbesondere elektromechanische, Fahrzeuglenkung mit einer Automatiklenkfunktion, insbesondere eine elektromechanische Servolenkung (englisch: "electric power steering" (EPS)) mit einer Automatiklenkfunktion. Dabei kann unter einer "Automatikienkfunktion" verstanden werden, dass die Fahrzeuglenkung dazu ausgelegt ist, das Fahrzeug automatisch, das heißt ohne aktive Lenkbewegung des Fahrers, zu lenken. Beispielsweise kann die Parklenkeinrichtung in eine elektromechanische Servolenkung integriert sein, welche sowohl zum Unterstützen einer durch den Fahrer induzierten Lenkbewegung (Servolenkung) als auch zum Durchführen einer automatischen Lenkbewegung (Automatiklenkfunktion) ausgestaltet ist. Es ist jedoch ebenso möglich, dass die Parklenkeinrichtung eine eigenständige elektromechanische Fahrzeuglenkung mit einer Automatiklenkfunktion zum Durchführen einer automatischen Lenkbewegung (Automatiklenkfunktion) ist.

Die Prozessierungseinrichtung kann insbesondere zum Überprüfen des Funktionsstatus der Parklenkeinrichtung, beispielsweise funktionsfähig oder nicht funktionsfähig, ausgelegt sein. Dabei kann die Prozessierungseinrichtung den Funktionsstatus der Parklenkeinrichtung abfragen. Die Parklenkeinrichtung kann ihren Funktionsstatus jedoch auch an die Prozessierungseinrichtung melden. Beispielsweise kann die Prozessierungseinrichtung beim Start des Parksystems und/oder ein oder mehrere Male während des Parkvorgangs den Funktionsstatus der Parklenkeinrichtung überprüfen, beispielsweise abfragen. Dies hat den Vorteil, dass im Fall einer fehlerhaften beziehungsweise unterbrochenen Kommunikation/Datenverbindung zwischen Prozessierungseinrichtung und Parklenkeinrichtung die Prozessierungseinrichtung den Fehler erkennt. Gegebenenfalls kann die Prozessierungseinrichtung die Parkanweisungseinrichtung jedoch auch auf eine Nichtfunktionsfähigkeitsmeldung von der Parklenkeinrichtung hin aktivieren beziehungsweise ansteuern. Dies hat den Vorteil, dass die zwischen Prozessierungseinrichtung und Parklenkeinrichtung übermittelte Datenmenge verringert werden kann.

Das Parksystem kann weiterhin eine Eingabeeinrichtung aufweisen, beispielsweise einen Schalter oder einen Touchscreen, über den der Fahrer die Prozessierungseinrichtung derart einstellen und/oder programmieren kann, dass die Prozessierungseinrichtung die Parkanweisungseinrichtung oder die Parklenkeinrichtung oder keine von beiden Einrichtungen aktiviert beziehungsweise ansteuert.

Das Sensorsystem kann beispielsweise einen oder mehrere Ultraschallsensoren und/oder einen oder mehrere Infrarotsensoren und/oder eine oder mehrere Kameras umfassen.

Ein weiterer Gegenstand der Erfindung ist ein Verfahren zum Parken, beispielsweise zum Einparken und/oder Ausparken, eines Kraftfahrzeugs mit einem erfindungsgemäßen Parksystem, welches die Verfahrensschritte:
a) Messen von Daten über die Umgebung des Fahrzeugs,
b) Berechnen von einer, von der aktuellen Fahrzeugposition ausgehenden Trajektorie aus gemessenen Umgebungsdaten, und
c) Ausgeben von Lenkanweisungen an den Fahrer und/oder automatisches Lenken des Fahrzeugs
umfasst.

Insbesondere kann die Parkanweisungseinrichtung der berechneten Trajektorie entsprechende Lenkanweisungen/Lenkhinweise an den Fahrer ausgeben und/oder die Parklenkeinrichtung das Fahrzeug entsprechend der berechneten Trajektorie automatisch lenken.

Im Rahmen einer Ausführungsform umfasst das Verfahren, insbesondere vor oder während den Verfahrenschritten a), b) und/oder c), mindestens einen Verfahrensschritt:
d) Überprüfen des Funktionsstatus, beispielsweise funktionsfähig oder nicht funktionsfähig, der Parklenkeinrichtung.

Beispielsweise kann die Prozessierungseinrichtung beim Start des Parksystems und/oder ein oder mehrere Male während des Parkvorgangs den Funktionsstatus der Parklenkeinrichtung überprüfen.

Dabei kann die Prozessierungseinrichtung den Funktionsstatus der Parklenkeinrichtung abfragen. Dies hat den Vorteil, dass im Fall einer fehlerhaften beziehungsweise unterbrochenen Kommunikation/Datenverbindung zwischen Prozessierungseinrichtung und Parklenkeinrichtung die Prozessierungseinrichtung den Fehler erkennt. Die Parklenkeinrichtung kann ihren Funktionsstatus, jedoch auch an die Prozessierungseinrichtung melden. Dies hat den Vorteil, dass die zwischen Prozessierungseinrichtung und Parklenkeinrichtung übermittelte Datenmenge verringert werden kann.

Alternativ oder zusätzlich dazu kann das Verfahren, insbesondere vor oder während den Verfahrenschritten a), b) und/oder c), jedoch auch den Verfahrensschritt:
e) Melden des Funktionsstatus, beispielsweise funktionsfähig oder nicht funktionsfähig, der Parklenkeinrichtung durch die Parklenkeinrichtung,
umfassen.

Im Rahmen einer weiteren Ausführungsform werden im Fall eines Ausfalls der Parklenkeinrichtung, insbesondere der Automatikfunktion der Parklenkeinrichtung, zum Parken Lenkanweisungen an den Fahrer ausgegeben. Dafür kann die Parkanweisungseinrichtung durch die Prozessierungseinrichtung aktiviert beziehungsweise angesteuert werden.

Hinsichtlich von möglichen Gründen für einen Ausfall der Parklenkeinrichtung, wird auf die Erläuterungen im Zusammenhang mit dem erfindungsgemäßen Parksystem verwiesen.

Im Rahmen einer weiteren Ausführungsform wird im Normalfall das Fahrzeug zum Parken automatisch gelenkt. Dafür kann die Prozessierungseinrichtung die Parklenkeinrichtung aktivieren beziehungsweise ansteuern. Das Ausgeben von Lenkanweisungen an den Fahrer kann daher im Normalfall entfallen. Dafür kann die Parkanweisungseinrichtung unaktiviert beziehungsweise unangesteuert bleiben.

Im Fall einer wieder einsatzbereiten Parklenkeinrichtung wird das Fahrzeug wieder automatisch gelenkt. Dafür kann die Prozessierungseinrichtung die Parklenkeinrichtung wieder aktivieren beziehungsweise ansteuern. Das Ausgeben von Lenkanweisungen an den Fahrer kann in diesem Fall wieder eingestellt werden. Die Parkanweisungseinrichtung kann in diesem Fall wieder deaktiviert werden.

Die Lenkanweisungen können an den Fahrer optisch und/oder akustisch und/oder haptisch ausgegeben werden.

Ein weiterer Gegenstand der Erfindung ist ein Computerprogramm, welches einem Prozessor ermöglicht ein erfindungsgemäßes Verfahren durchzuführen.

## Patentansprüche

1. Parksystem für ein Kraftfahrzeug, umfassend
- ein Sensorsystem zum Messen von Daten über die Umgebung des Fahrzeugs,
- eine Parkanweisungseinrichtung zum Ausgeben von Lenkanweisungen an den Fahrer,
- eine Parklenkeinrichtung zum automatischen Lenken des Fahrzeugs beim Parken, und
- eine zentrale Prozessierungseinrichtung zum Berechnen von einer, von der aktuellen Fahrzeugposition ausgehenden Trajektorie aus gemessenen Umgebungsdaten und Steuern der Parkanweisungseinrichtung und der Parklenkeinrichtung.

2. Parksystem nach Anspruch 1, **dadurch gekennzeichnet, dass** die Prozessierungseinrichtung im Fall eines Ausfalls der Parklenkeinrichtung die Parkanweisungseinrichtung aktiviert.

3. Parksystem nach Anspruch 1 oder 2, **dadurch gekennzeichnet, dass** die Prozessierungseinrichtung im Normalfall die Parklenkeinrichtung aktiviert.

4. Parksystem nach einem der Ansprüche 1 bis 3, **dadurch gekennzeichnet, dass** die Parkanweisungseinrichtung eine Benutzerschnittstelle zum optischen und/oder akustischen und/oder haptischen Ausgeben von Lenkanweisungen an den Fahrer ist.

5. Parksystem nach einem der Ansprüche 1 bis 4, **dadurch gekennzeichnet, dass** die Parklenkeinrichtung eine elektrische Fahrzeuglenkung mit einer Automatiklenkfunktion ist.

6. Verfahren zum Parken eines Kraftfahrzeugs mit einem Parksystem nach einem der Ansprüche 1 bis 5, umfassen die Verfahrensschritte:
a) Messen von Daten über die Umgebung des Fahrzeugs,
b) Berechnen von einer, von der aktuellen Fahrzeugposition ausgehenden Trajektorie aus gemessenen Umgebungsdaten, und
c) Ausgeben von Lenkanweisungen an den Fahrer und/oder automatisches Lenken des Fahrzeugs.

7. Verfahren nach Anspruch 6, **dadurch gekennzeichnet, dass** das Verfahren mindestens einen Verfahrensschritt:
d) Überprüfen des Funktionsstatus der Parklenkeinrichtung umfasst.

8. Verfahren nach Anspruch 6 oder 7, **dadurch gekennzeichnet, dass** im Fall eines Ausfalls der Parklenkeinrichtung zum Parken Lenkanweisungen an den Fahrer ausgegeben werden.

9. Verfahren nach einem der Ansprüche 6 bis 8, **dadurch gekennzeichnet, dass** im Normalfall das Fahrzeug zum Parken automatisch gelenkt wird.

10. Computerprogramm, welches einem Prozessor ermöglicht ein Verfahren nach einem der Ansprüche 6 bis 9 durchzuführen.
